**Europäisches Patentamt**

**European Patent Office**

**Office européen des brevets**

(19)

(11) **EP 1 526 595 A2**

(12) **EUROPEAN PATENT APPLICATION**

| | |
|---|---|
| (43) Date of publication:<br>**27.04.2005 Bulletin 2005/17** | (51) Int Cl.$^7$: **H01M 8/04** |

(21) Application number: **04024218.2**

(22) Date of filing: **11.10.2004**

| | |
|---|---|
| (84) Designated Contracting States:<br>**AT BE BG CH CY CZ DE DK EE ES FI FR GB GR HU IE IT LI LU MC NL PL PT RO SE SI SK TR**<br>Designated Extension States:<br>**AL HR LT LV MK** | (72) Inventor: **Mori, Daisuke**<br>**Yokosuka-shi Kanagawa-ken (JP)** |
| (30) Priority: **21.10.2003 JP 2003360621** | (74) Representative: **Grünecker, Kinkeldey,**<br>**Stockmair & Schwanhäusser Anwaltssozietät**<br>**Maximilianstrasse 58**<br>**80538 München (DE)** |
| (71) Applicant: **NISSAN MOTOR CO., LTD.**<br>**Yokohama-shi Kanagawa-ken (JP)** | |

(54) **Fuel cell system**

(57)   A fuel cell system which includes: a fuel cell having an electrolyte membrane; a tank for storing water for humidifying the electrolyte membrane; a pump for circulating the water through the tank and the fuel cell; a sensor for sensing amount of water in the tank; and a controller for controlling operation of the fuel cell system. The controller changes I-V characteristic of the fuel cell to shift operation point thereon depending on the amount of water sensed by the sensor.

**FIG. 1**

EP 1 526 595 A2

## Description

## BACKGROUND OF THE INVENTION

## FIELD OF INVENTION

The present invention relates to a fuel cell system, particularly to control of pure water storage amount in a pure water circulating system for humidifying an electrolyte membrane of a fuel cell.

## DESCRIPTION OF RELATED ART

A fuel cell is an electrochemical device to convert chemical energy of fuel gas such as hydrogen gas and oxidizer gas containing oxygen supplied thereto, directly to electric energy which is extracted from electrodes provided on both sides of an electrolyte thereof. A Polymer Electrolyte Fuel Cell using a solid polymer electrolyte membrane has low operation temperature and can be easily handled, and therefore, it has been a focus of attention as a power source for a fuel cell vehicle.

In A Polymer Electrolyte Fuel Cell, protons are transported in a hydrated state from a fuel electrode to an oxidizer electrode through the solid polymer electrolyte membrane. The electrolyte membrane is thus required to be retained in a moderately humidified state in order to exert sufficient proton conductivity. Typically, drying of the electrolyte membrane is prevented by supplying humidified fuel gas or air to the fuel cell, or by supplying cooling water for directly humidifying the electrolyte membrane.

Preferably, water formed by the power generating reaction of the fuel cell is used as humidifying water. This eliminates the necessity of replenishing water.

Japanese Patent Application Laid-Open Publication No. 2000-30727 discloses a device for collecting water vapor in discharged gas from a fuel cell stack to recover water in a water supply system. The device is actuated when the water supply system needs water to be added.

## SUMMARY OF THE INVENTION

Under operation in a dry condition or at high temperature, a polymer electrolyte membrane of the fuel cell stack quickly dries, and large amount of water is required to humidify the fuel cell stack. In such a condition, the above-described device cannot make up for the vaporizing water. The water supply system thereof runs short of water, thereby affecting humidification and cooling of the fuel cell stack.

An object of the present invention is to provide a fuel cell system capable of continuing operation in a water shortage condition without replenishing water.

An aspect of the present invention is a fuel cell system, comprising: a fuel cell having an electrolyte membrane; a tank for storing water for humidifying the electrolyte membrane; a pump for circulating the water through the tank and the fuel cell; a sensor for sensing amount of water in the tank; and a controller for controlling operation of the fuel cell system, wherein the controller changes I-V characteristic of the fuel cell to shift operation point thereon depending on the amount of water sensed by the sensor.

## BRIEF DESCRIPTION OF THE DRAWINGS

The invention will now be described with reference to the accompanying drawings wherein:

Fig.1 is a system block diagram of a fuel cell system according to a first embodiment of the present invention.
Fig.2 is an I-V characteristic of a fuel cell stack, in which a solid line shows the I-V characteristic when temperature of the fuel cell stack is normal, and a broken line shows the I-V characteristic when temperature of the fuel cell stack is low.
Fig.3 is an I-V characteristic of the fuel cell stack, when power generated by the fuel cell stack is changed in a transitional state.
Fig.4 is a map for explaining the change of operation points of the fuel cell on an iso-power curve which is a line joining points where the power is the same.
Fig.5 is a flow chart of an operation of the first embodiment.
Fig.6A is a time chart showing a generated power in a transitional operation state based on time change.
Fig.6B is a time chart showing a battery SOC in a transitional operation state based on time change.
Fig.7 is a flow chart of an operation of a second embodiment of the present invention.
Fig.8 is a system block diagram of a fuel cell system according to a third embodiment of the present invention.

## DETAILED DESCRIPTION OF THE PREFERRED EMBODIMENT

Embodiments of the present invention will be explained below with reference to the drawings, wherein like members are designated by like reference characters.

Each embodiment shows a fuel cell system capable of eliminating necessity of replenishing pure water and preferable for a fuel cell vehicle.

### First embodiment

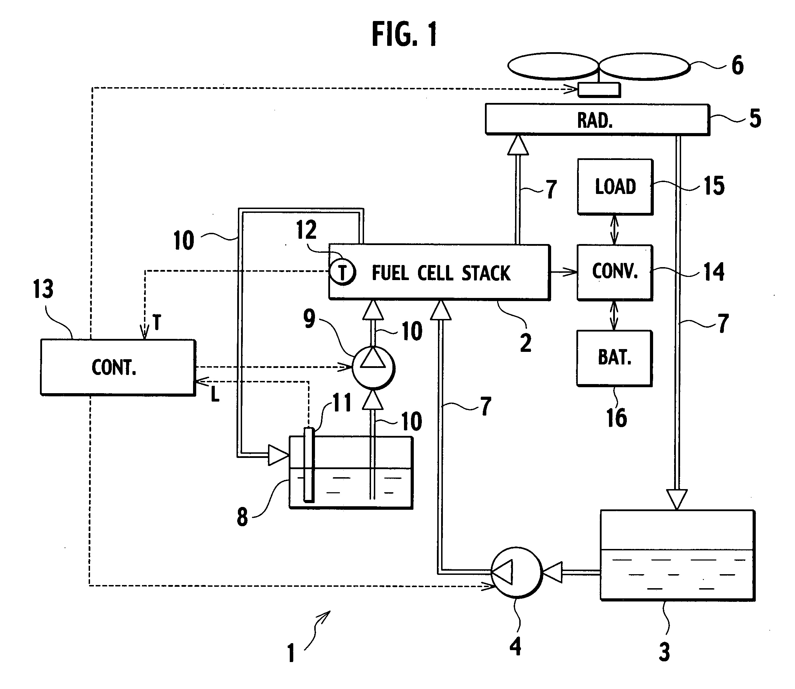

In Fig.1, a fuel cell system 1 includes:

a fuel cell stack 2 provided with a solid polymer electrolyte membrane;

a coolant tank 3 which stores coolant for cooling the fuel cell stack 2;

a coolant pump 4 which sends the coolant to a coolant channel of the fuel cell stack 2 from the coolant tank 3;

a radiator 5 which discharges or radiates heat of the coolant outside the system;

a radiator fan 6 which sends air to the radiator 5;

coolant piping 7 which connect the coolant tank 3, the coolant pump 4, the fuel cell stack 2, and the radiator 5;

a pure water tank 8 which stores humidifying pure water;

a pure water pump 9 which sends pure water to a humidifying water channel of the fuel cell stack 2 from the pure water tank 8;

pure water piping 10 which connect the pure water tank 8, the pure water pump 9, and the fuel cell stack 2;

a water level sensor 11 which detects water level of the pure water tank 8;

a coolant temperature sensor 12 which detects coolant temperature in the fuel cell stack 2;

a controller 13 for controlling operation of the entire fuel cell system;

a converter 14;

a load device 15; and

a battery 16.

A fuel gas supplying system for supplying fuel gas containing hydrogen to the fuel cell stack 2 and an oxidizer gas supplying system (not shown) for supplying oxidizer gas containing oxygen to the fuel cell stack 2 can be the one well-known in the art.

The controller 13 controls operation of the entire fuel cell system and changes an operation point on a current-voltage characteristic of the fuel cell stack 2 (referred to as I-V characteristic hereafter) to a different operation point, depending on amount of water in the pure water tank 8. The controller 13 is a microprocessor including CPU, ROM which stores programs and control constants, RAM which provides work memory for program execution, and input/output interfaces.

The water level sensor 11 which detects water level of the pure water tank 8, and the coolant temperature sensor 12 which detects temperature of the fuel cell stack 2 are connected to the controller 13 as input devices, and the coolant pump 4, the radiator fan 6, and the pure water pump 9 are connected thereto as output devices.

The converter 14 has a function to supply electric power generated by the fuel cell stack 2 and/or electric power of the battery 16 to the load device 15. The converter 14 also has a function to charge the battery 16 with part of or all of the power generated by the fuel cell stack 2, when amount of the generated power has some margin and SOC (state of charge) of the battery does not reach a predetermined upper limit. In the case that the fuel cell system 1 is applied to a fuel cell vehicle, etc., the battery 16 can also be charged with electric power which is regenerated by a load device at deceleration, rectified and adjusted voltage.

The pure water used for humidifying the solid polymer membrane in the fuel cell stack 2 is stored in the pure water tank 8, pumped by the pure water pump 9, and supplied to the fuel cell stack 2 through the pure water piping 10.

Moreover, water generated by the reaction in the fuel cell stack 2 flows through the pure water piping 10 and is stored in the pure water tank 8.

The coolant for adjusting temperature of the fuel cell stack 2 is stored in the coolant tank 3. The coolant is pumped by the coolant pump 4 and supplied to the fuel cell stack 2 through the coolant piping 7.

The coolant thus supplied and circulated receives heat generated in the fuel cell stack 2, and the radiator 5 discharges or radiates the heat through heat-exchange with outside air, thereby keeping the fuel cell stack 2 at moderate temperature.

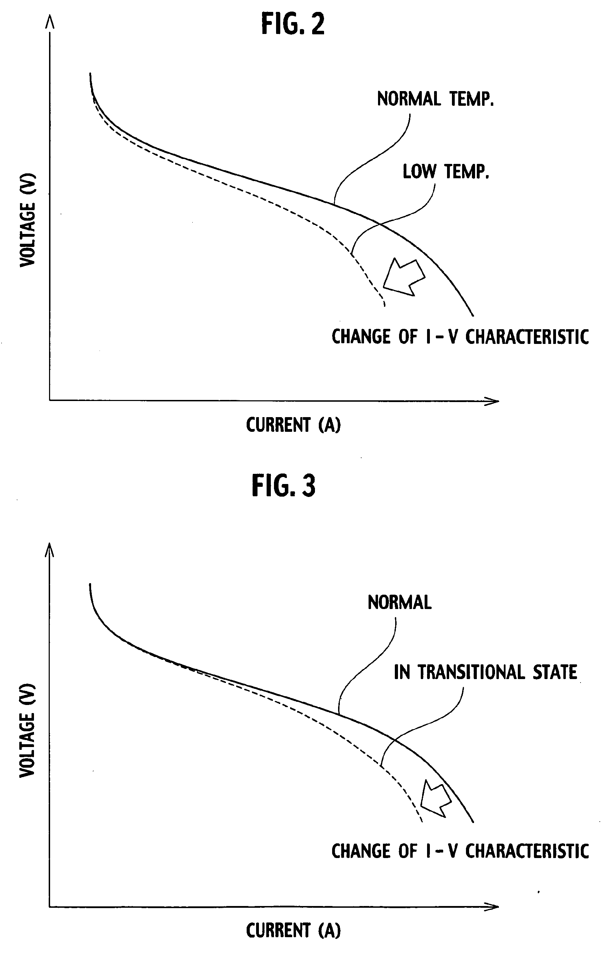

Fig.2 shows I-V characteristic of the fuel cell stack 2. The curve of a solid line shows I-V characteristic when the fuel cell stack 2 is at normal temperature. The curve of a broken line shows I-V characteristic when the fuel cell stack 2 is at low temperature. If the fuel cell stack 2 is cooled to have the temperature thereof lower than that in a normal condition, for example, by increasing rotational speed of the radiator fan 6 and flow rate of air to be sent to the radiator 5, the I-V characteristic curve of the fuel cell stack 2 is changed from that in a normal condition to the one by a broken line as shown in Fig.2. In this change, an output voltage drops even at the same output current value. Ratio of the voltage drop to the output voltage in a normal condition tends to be larger as the output current value becomes larger.

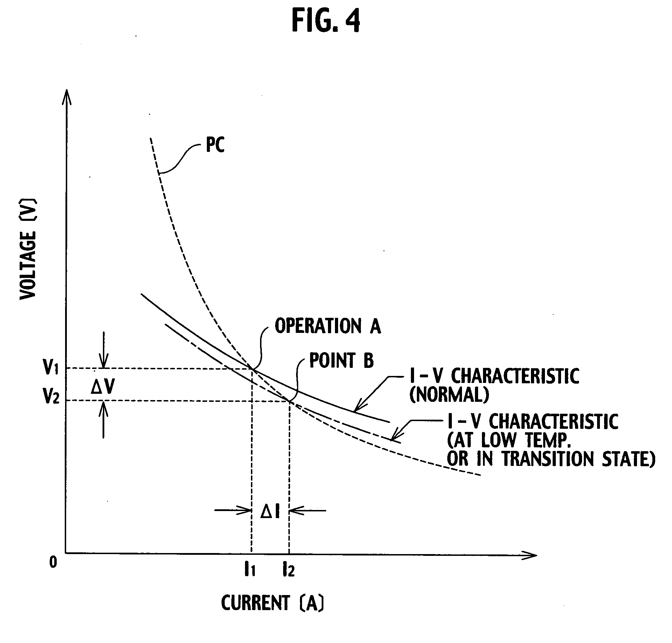

When the operation point of the fuel cell stack 2 is intentionally changed by using the above-described phenomenon, that is, the temperature of the fuel cell stack 2 is lowered to have the I-V characteristic thereof changed, and then the electric power is controlled to be the electric power PW2 (= current I2 X voltage V2) which is equal to the electric power PW1 (=current I1 X voltage V1) before the I-V characteristic is changed, the operation point is accordingly shifted from the operation point A to the operation point B on an iso-power curve PC, as shown in Fig.4. If the operation point is changed from the operation point A to the operation point B, the current is increased by $\Delta$ I while the voltage drops by $\Delta$V. As the current is thus increased, consumption rate of hydrogen per unit time is also increased, and consequently amount of water generated by the reaction of hydrogen and oxygen is increased.

When the fuel cell system is operated in a dry condition or at high temperature, or in a condition that the polymer electrolyte membrane of the fuel cell stack 2 is dried and a large amount of water is required for humidifying the polymer electrolyte membrane thus dried, amount of water to be consumed by evaporation of water or in humidification of the fuel cell stack 2 exceeds the amount of water generated by the reaction in the fuel cell stack 2. Thus, possibility is that the system is liable to be in water shortage, thereby making it impossible to humidify the fuel cell stack 2 any more.

By controlling operation of the fuel cell system as described above, even in a case that water level L in the pure water tank 8 is below a predetermined value (L1), amount of water to be generated in the fuel cell stack 2 is increased, and the fuel cell system can continue its operation safely without shortage of the pure water for humidification,.

In a case that the start of the change of the operation point is too late to recover the lost water, and water level of the pure water tank 8 becomes below a predetermined value (L0), the power generation of the fuel cell system is stopped so as to prevent the fuel cell stack 2 from being damaged.

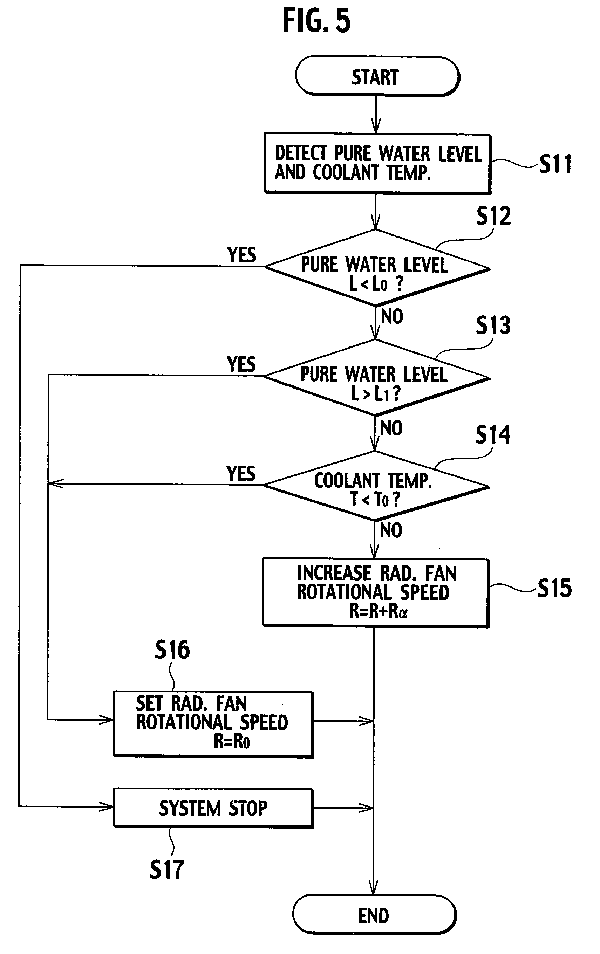

Fig.5 is a flow chart explaining the operation method of the fuel cell system, executed by the controller 13 of the first embodiment.

In Fig.5, first, in step S11, the controller 13 reads the water level L of the pure water tank 8 from the water level sensor 11 and the coolant temperature T in the fuel cell stack 2 from the coolant temperature sensor 12. Next, in step S12, it is judged whether or not the water level L of the pure water tank 8 is lower than the operation stop judgment water level L0. If the water level L is lower than the operation stop judgment water level L0, a process is advanced to step S17, and the fuel cell system is stopped, ending the process.

If it is determined, in the step S12, that the water level L is higher than the operation stop judgment water level L0, the process is advanced to step S13. In the step S13, it is judged whether or not the water level L of the pure water tank 8 is above a predetermined water level L1. If the water level L is above the predetermined water level L1, the process is advanced to step S16. In the step S16, the controller 13 sets the rotational speed R of the radiator fan to a predetermined rotational speed R0, and the process is ended.

If it is determined, in the step S13, that the water level L is lower than the predetermined water level L1, the process is advanced to step S14. In the step S14, it is judged whether or not the stack coolant temperature T detected by the coolant temperature sensor 12 is below a predetermined temperature T0. If the stack coolant temperature is below the predetermined temperature T0, the process is advanced to step S16.

If it is determined, in the step S14, that the stack coolant temperature T is not below the predetermined temperature T0, the process is advanced to step S15. In the step S15, the rotational speed R of the radiator fan is increased by an amount corresponding to a predetermined increased value $R\alpha$, and the process is ended.

Thus, when the water level of the pure water tank is lower than the predetermined water level L1, the rotational speed of the radiator fan is increased, thereby increasing an amount of heat discharged or radiated from the radiator. The temperature of the fuel cell stack 2 is accordingly lowered below T0 which is low enough to change the I-V characteristic thereof to increase amount of water generated, and by increasing the amount of the generated water, the water level can be restored from a pure water shortage state.

Second embodiment

Next, a fuel cell system according to a second embodiment of the present invention will be described. The structure of the fuel cell system of the second embodiment is the same as that of the first embodiment shown in Fig.1. In the first embodiment, the temperature of the fuel cell stack 2 is changed to restore the water level from the pure water shortage state. Meanwhile, in the second embodiment, amount of the generated water is increased to restore the water level, by an operation to transitionally change or forcibly fluctuate the power generated by the fuel cell. Such an operation state is referred to as a transitional operation state hereafter.

As shown in Fig. 3, when the electric power generated from the fuel cell stack 2 is changed to the transitional operation from that of normal operation by changing an instruction value of the generated power, the I-V characteristic thereof is temporarily changed and the voltage drops.

If the operation point of the fuel cell stack 2 is intentionally changed using the above described phenomenon, that is, the fuel cell stack 2 is set in the transitional operation and the I-V characteristic thereof is changed, and if the electric power is generated at an average electric power equal to that before the I-V characteristic is changed, the current is increased while the voltage drops, and the consumption of hydrogen is accordingly increased. Therefore, amount of water generated by reaction of the hydrogen is increased, and even in the water shortage state, the fuel cell system can continue its operation without replenishing water.

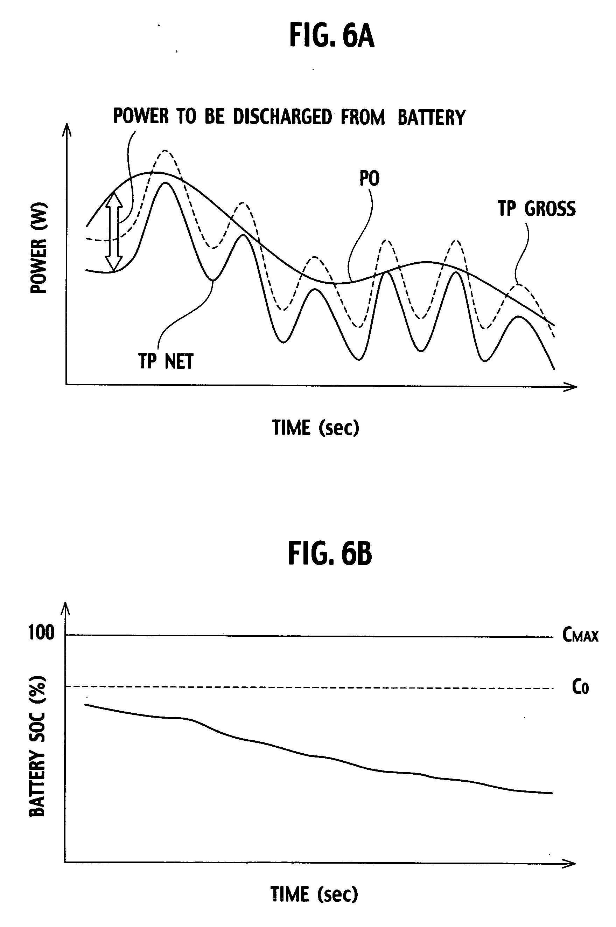

Fig.6A illustrates an example of changing target NET power P0 of the fuel cell stack by repeating increase/decrease of the electric power, when the humidifying pure water falls short, wherein the target NET power P0 is determined from a normal vehicle driving state and a normal acceleration opening. Fig.6A illustrates the relationship between a target GROSS power (TPgross) and a target NET power (TPnet) in the fuel cell system in water shortage.

Here, NET power means the electric power obtained by subtracting power consumed by auxiliary machines of the fuel cell, such as a blower and/or a compressor for supplying air to the fuel cell stack 2, the coolant pump 4, the pure water pump 9, and the radiator fan 6, from the gross power (GROSS power) of the fuel cell stack 2, and it is the electric power that is available as power for the other external equipment.

For example, a target electric power TP with transitionally increased/decreased power value can be defined as a power that repeats sinusoidal increase/decrease in power value on the basis of the target electric power P0 of normal operation, as expressed by the following equation (1). The average power of the target electric power TP is controlled to be equal to the target electric power P0 of normal operation.

$$TP = P0 + P1 \, SIN \, (\omega t + \theta) \qquad (1)$$

where, P1 is a maximum range or amplitude of power increase/decrease, $\omega$ is an angular frequency of increase/decrease, and $\theta$ is an initial phase angle.

In a case that state of charge (SOC) of the battery 16 which stores the electric power generated by the fuel cell stack 2, is found to be equal to C0 in Fig. 6B or more, the transitional operation is not conducted so as to prevent overcharging the battery 16. In addition, the angular frequency $\omega$ of power increase/decrease in transitional operation is sufficiently small as compared with thermal time constant derived from heat capacity of the fuel cell stack 2. Therefore, there is almost no effect on the temperature of the fuel cell stack coolant during transitional operation, eliminating the necessity of taking the temperature change thereof into consideration.

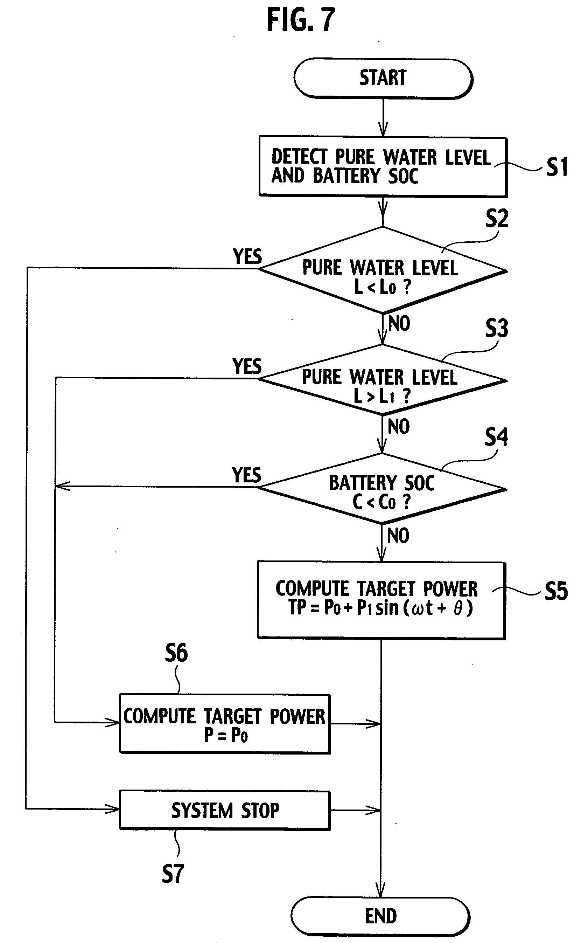

Fig. 7 is a flow chart explaining the operation of the fuel cell system executed by the controller 13 of the second embodiment.

In Fig. 7, first, in step S1, the controller 13 reads water level L of the pure water tank 8 from the water level sensor 11, and SOC of the battery 16 from the converter 14 or a battery monitor, which is not shown. Next, in step 2, it is judged whether or not the water level L is lower than the operation stop judgment water level L0. If the water level L is lower than the operation stop judgment water level L0, the process is advanced to step 7, and the fuel cell system is stopped and the process is ended.

If it is determined, in Step 2, that the water level L is above the operation stop judgment water level L0, the process is advanced to step 3. It is judged, in Step 3, whether or not the water level L of the pure water tank 8 is above the predetermined water level L1. If the water level L is above the predetermined water level L1, the process is advanced to step 6, the electric power is controlled to be set to the target electric power P0 of normal operation by which the transitional operation is not conducted, and the process is ended.

If it is determined, in Step 3, that the water level L is below the predetermined water level L1, the process is advanced to step 4. It is judged, in Step 4, whether or not C, which is a battery SOC, is above a predetermined SOC (C0). The predetermined SOC (C0) is set to 80%, for example, which is a state of charge in which no over-charge is caused. If the battery SOC (C) is above C0, the process is advanced to step 6.

If it is determined, in Step 4, that the battery SOC (C) is not above C0, the process is advanced to step 5, and as shown in the equation (1), the stack target electric power TP is changed to the electric power obtained by adding the sinusoidal change to the target electric power P0 of normal operation, and then the process is ended.

Thus, when the water level of the pure tank is lower than the predetermined water level L1, by changing the stack target electric power TP to the electric power obtained by adding the sinusoidal change to the target electric power P0 of normal operation, the amount of the generated water is increased, and the water level can thereby be restored from the pure water shortage state.

Third embodiment

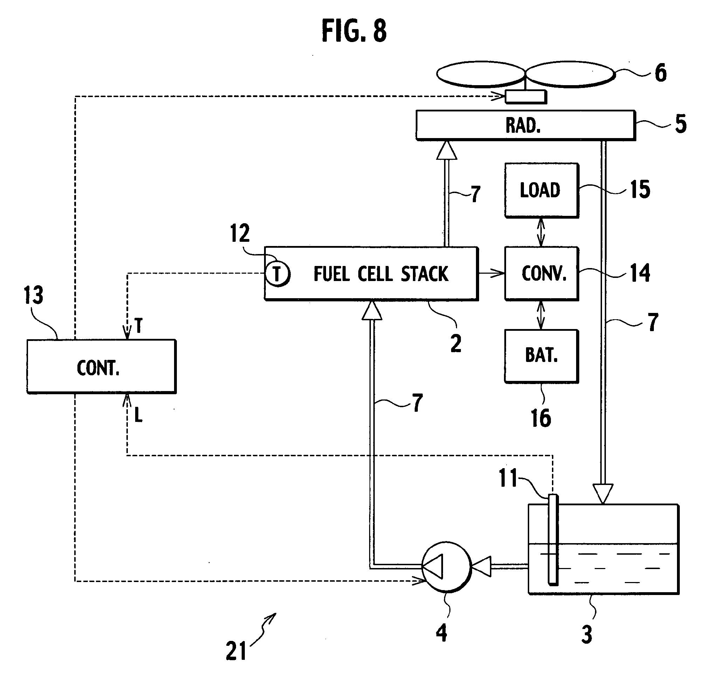

Next, with reference to Fig.8, a fuel cell system according to a third embodiment of the present invention will be described. In the above-described embodiments 1 and 2, a cooling system and a humidifying system are separated, and each of them has a tank, a pump, and piping individually. However, the present invention can be applied to a system in which pure water is used as coolant for adjusting temperature of the fuel cell stack 2, and the humidifying pure water system and the coolant system are integrated.

In Fig. 8, the fuel cell system 21 of the third embodiment includes:

the fuel cell stack 2;
the coolant tank 3 which stores pure water for cooling and humidifying the fuel cell stack 2;
the coolant pump 4 which sends the coolant to the pure water channel of the fuel cell stack 2 from the coolant tank 3;
the radiator 5 which discharges or radiates heat of the coolant outside the system;
the radiator fan 6 which sends air to the radiator 5;
the coolant piping 7 which connect the coolant tank 3, the coolant pump 4, the fuel cell stack 2, and the radiator 5;
the water level sensor 11 which detects water level of the coolant tank 3;
the coolant temperature sensor 12 which detects coolant temperature in the fuel cell stack 2;
the controller 13 for controlling operation of the entire fuel cell system;
the converter 14;
the load device 15; and
the battery 16.

How to operate of this embodiment is the same as that of the first and second embodiments excepting that the humidifying pure water system and the coolant system are integrated, and therefore the same effect can be obtained.

The preferred embodiments described herein are illustrative and not restrictive, and the invention may be practiced or embodied in other ways without departing from the spirit or essential character thereof. The scope of the invention being indicated by the claims, and all variations which come within the meaning of claims are intended to be embraced herein.

The present disclosure relates to subject matters contained in Japanese Patent Application No. 2003-360621, filed on October 21, 2003, the disclosure of which is expressly incorporated herein by reference in its entirety.

**Claims**

1. A fuel cell system (1), comprising:

a fuel cell (2) having an electrolyte membrane;
a tank (3, 8) for storing water for humidifying the electrolyte membrane;
a pump (4, 9) for circulating the water through the tank (3, 8) and the fuel cell (2);
a sensor (11) for sensing amount of water in the tank (3, 8); and
a controller (13) for controlling operation of the fuel cell system (1), wherein
the controller (13) changes I-V characteristic of the fuel cell (2) to shift operation point thereon depending on the amount of water sensed by the sensor (11).

2. The fuel cell system (1) of claim 1, wherein the controller (13) temporarily increases power to be generated by the fuel cell (2) , if the amount of water sensed by the sensor (11) is below a first predetermined value.

3. The fuel cell system (1) of claim 2, further comprising:

a battery (16) for storing power generated by the fuel cell (2), wherein
the controller (13) stops increasing power to be generated by the fuel cell (2) , if state of charge of the battery (16) exceeds a predetermined value.

4. The fuel cell system (1) of claim 1, wherein the controller (13) lowers temperature of the fuel cell (2) , if the amount of water sensed by the sensor (11) is below a first predetermined value.

5. The fuel cell system (1) of claim 4, wherein the controller (13) stops the fuel cell system (1), if the amount of water sensed by the sensor (11) is below a second predetermined value which is smaller than the first predetermined value.

6. The fuel cell system (1) of claim 1, wherein the water stored in the tank (3, 8) is used for cooling the fuel cell (2).

7. A method for recovering water of a fuel cell system (1) which includes a fuel cell (2) having an electrolyte membrane; a tank (3, 8) for storing water for humidifying the electrolyte membrane; and a sensor (11) for sensing amount of water in the tank (3, 8), the method comprising:

changing I-V characteristic of the fuel cell (2) to shift operation point thereon depending on the amount of water sensed by the sensor (11).

# FIG. 1

EP 1 526 595 A2

# FIG. 2

VOLTAGE (V)

NORMAL TEMP.

LOW TEMP.

CHANGE OF I - V CHARACTERISTIC

CURRENT (A)

# FIG. 3

VOLTAGE (V)

NORMAL

IN TRANSITIONAL STATE

CHANGE OF I - V CHARACTERISTIC

CURRENT (A)

# FIG. 4

# FIG. 5

```
            ┌─────────────┐
            │    START    │
            └─────────────┘
                   │
                   ▼
         ┌──────────────────────┐
         │ DETECT PURE WATER LEVEL │──── S11
         │ AND COOLANT TEMP.       │
         └──────────────────────┘
                   │
                   ▼                      S12
  YES        ◇ PURE WATER LEVEL ◇
  ◄──────────    L < L₀ ?
                   │ NO
                   ▼                      S13
  YES        ◇ PURE WATER LEVEL ◇
  ◄──────────    L > L₁ ?
                   │ NO                   S14
                   ▼
  YES        ◇ COOLANT TEMP. ◇
  ◄──────────    T < T₀ ?
                   │ NO
                   ▼
         ┌──────────────────┐
         │ INCREASE RAD. FAN │──── S15
         │ ROTATIONAL SPEED  │
         │ R=R+Rα            │
         └──────────────────┘
                   │
     S16           │
      ┌────────────┐
      │ SET RAD. FAN │
      │ ROTATIONAL SPEED │──►
      │ R=R₀          │
      └────────────┘
      ┌────────────┐
      │ SYSTEM STOP │──►
      └────────────┘
     S17
                   │
                   ▼
            ┌─────────────┐
            │     END     │
            └─────────────┘
```

Detect pure water level and coolant temp. — S11

S12 — PURE WATER LEVEL L < L$_0$ ? — YES / NO

S13 — PURE WATER LEVEL L > L$_1$ ? — YES / NO

S14 — COOLANT TEMP. T < T$_0$ ? — YES / NO

S15 — INCREASE RAD. FAN ROTATIONAL SPEED R=R+R$\alpha$

S16 — SET RAD. FAN ROTATIONAL SPEED R=R$_0$

S17 — SYSTEM STOP

# FIG. 6A

POWER TO BE DISCHARGED FROM BATTERY

PO

TP GROSS

POWER (W)

TP NET

TIME (sec)

# FIG. 6B

100 ··· CMAX

C0

BATTERY SOC (%)

TIME (sec)

## FIG. 7

START

DETECT PURE WATER LEVEL AND BATTERY SOC — S1

S2

PURE WATER LEVEL $L < L_0$ ? — YES

NO

S3

PURE WATER LEVEL $L > L_1$ ? — YES

NO

S4

BATTERY SOC $C < C_0$ ? — YES

NO

COMPUTE TARGET POWER $TP = P_0 + P_1 \sin(\omega t + \theta)$ — S5

S6

COMPUTE TARGET POWER $P = P_0$

SYSTEM STOP

S7

END

FIG. 8